# EUROPÄISCHE PATENTANMELDUNG

(11) **EP 1 161 876 A2**
(43) Veröffentlichungstag der Anmeldung: **12.12.2001**
(21) Anmeldenummer: 01109727.6
(22) Anmeldetag: 20.04.2001
(51) Int. Cl.: A23B 7/005

(54) **Vorrichtung zum kontinuierlichen Sterilisieren eines stückigen Gemüse- bzw. Fruchtproduktes**

(30) Priorität: 09.06.2000 DE 10028267
(71) Anmelder: SIG Combibloc International Systems GmbH, 52438 Linnich (DE)
(72) Erfinder: Auer, Dirk, 40670 Meerbusch (DE); Friedrich, Peter, Dr., 52441 Linnich (DE); Heep, Frank, 41470 Neuss (DE); Trautwein, Werner, 52511 Geilenkirchen (DE)
(74) Vertreter: Cohausz & Florack

(57) **Zusammenfassung**

Dargestellt und beschrieben ist eine Vorrichtung zum kontinuierlichen Sterilisieren eines stückigen Gemüse-bzw. Fruchtproduktes mit einer Vielzahl von Behältern zur Aufnahme eines portionierten zu sterilisierenden Produkts und wenigstens je einer Portioniereinheit (1), Sterilisiereinheit für die Behälter (10), Sterilisiereinheit (5) für die das Produkt aufnehmenden Packungen (14), aseptischer Fülleinheit (6) und Verschließeinheit (7), wobei die Behälter (10) kontinuierlich im Kreislauf gefördert werden. Mit der Erfindung wird bei konstruktiv einfachem Aufbau eine hohe Zuverlässigkeit erreicht, so dass betriebsnotwendige Stillstandszeiten auf ein Minimum reduziert werden können. Dies wird dadurch erreicht, dass als Sterilisiereinheit für die Behälter (10) wenigstens drei Autoklaven (2, 3, 4) vorgesehen sind, von denen stets einer beladen, ein zweiter zur Sterilisation mit Druck und Temperatur beaufschlagt und der Dritte bei gleichzeitigem Umfüllen des Produktes in die Packungen (14) entladen wird.

## Beschreibung

Die Erfindung betrifft eine Vorrichtung zum kontinuierlichen Sterilisieren eines stückigen Gemüsebzw. Fruchtproduktes mit einer Vielzahl von Behältern zur Aufnahme eines portionierten zu sterilisierenden Produkts und wenigstens je einer Portioniereinheit, Sterilisiereinheit für die Behälter, Sterilisiereinheit für die das Produkt aufnehmenden Packungen, aseptischer Fülleinheit und Verschließeinheit, wobei die Behälter kontinuierlich im Kreislauf gefördert werden.

Aus dem Stand der Technik sind verschiedene Verfahren und Vorrichtungen zum kontinuierlichen Sterilisieren von stückigen Produkten bekannt. So beschreibt die DE 16 92 224 A1 ein Verfahren, bei dem die Sterilisation nach dem Abfüllen des Produktes in seine endgültige Verpackung erfolgt, die befüllten, noch offenen Behältnisse werden einem Autoklaven zugeführt und in demselben verschlossen. Nachteilig bei diesem bekannten Verfahren ist insbesondere das Vorhandensein von Prozesswasser in der Verpackung.

Weiter ist es aus der DE 195 20 066 A1 für den Bereich der Konservenherstellung bekannt, die Produkte erst abzufüllen, die Konserven dann fertig zu verschließen und erst abschließend die Sterilisation durchzuführen.

Schließlich sind aus der DE 198 05 773 A1 ein Verfahren und eine Vorrichtung zum kontinuierlichen Sterilisieren von Einzelportionen eines stückigen Gemüse- bzw. Fruchtproduktes bekannt. Diese Vorrichtung weist eine Vielzahl von Behältern zur Aufnahme des bereits portionierten zu sterilisierenden Produktes auf, die mittels eines Drehantriebes eine Portioniereinheit, eine Sterilisiereinheit und eine aseptische Fülleinheit durchlaufen. Gleichzeitig werden oben offene Packungen, vorzugsweise Karton-/Kunststoff-Verbundpackungen, hergestellt und in einer separaten Sterilisiereinheit sterilisiert. Die beiden Linien treffen sich in der aseptischen Fülleinheit, wo durch Öffnen der Behälter das portionierte und bereits sterilisierte Produkt in die Packungen gelangt, die anschließend verschlossen werden und dann versandfertig sind.

Die bekannte Vorrichtung, von der die Erfindung ausgeht, ist konstruktiv aufwendig und störanfällig. Für Wartungsarbeiten an einer der um den Drehantrieb gruppierten Einheit, beispielsweise dem Autoklaven, muss die gesamte Vorrichtung stillgelegt werden. Darüber hinaus sind auch die Sterilisierbehälter aufgrund ihrer Konstruktion mit schwenkbarem Boden anfällig und bedürfen daher einer regelmäßigen Wartung und Reinigung.

Der Erfindung liegt daher die Aufgabe zugrunde, die eingangs genannte und zuvor näher beschriebene Vorrichtung zum kontinuierlichen Sterilisieren so auszugestalten und weiterzubilden, dass bei konstruktiv einfachem Aufbau eine hohe Zuverlässigkeit erreicht wird, so dass betriebsnotwendige Stillstandszeiten auf ein Minimum reduziert werden können.

Diese Aufgabe wird dadurch gelöst, dass als Sterilisiereinheit für die Behälter wenigstens drei Autoklaven vorgesehen sind, von denen stets einer beladen, ein zweiter zur Sterilisation mit Druck und Temperatur beaufschlagt und der Dritte bei gleichzeitigem Umfüllen des Produktes in die Packungen entladen wird.

Erfindungsgemäß ist erkannt worden, dass ein reibungsloser Sterilisationsablauf am besten dadurch erfolgen kann, dass stets ein Autoklav, vollständig beladen, einen Sterilisationsprozess durchführt, während die beiden anderen jeweils be- und entladen werden. Gemäß einer weiteren Lehre der Erfindung ist die Größe der Autoklaven dabei so gewählt, dass die Zeit zum Sterilisieren im wesentlichen der Be- und Entladezeit entspricht.

Dadurch, dass in weiterer Ausgestaltung der Erfindung die Behälter außerhalb des Autoklaven einzeln in einer Zwangsführung geführt werden, entsteht ein weiterer Vorteil gegenüber dem Stand der Technik. Durch die Verwendung von einer Vielzahl einzelner Behälter sind die Reinigung und Wartung völlig unkompliziert, da einzelne Behälter aus der Zwangsführung aus- und wieder eingeschleust werden können.

Die Autoklaven sind dabei so aufgebaut, dass jeder eine Vielzahl von Einzelbehältern aufnehmen kann, die zweckmäßigerweise in mehreren Reihen mit jeweils mehreren Behältern angeordnet sind.

Beim Anfahren der Vorrichtung werden die gereinigten Behälter mit einer vorportionierten Menge des zu sterilisierenden stückigen Gemüse- bzw. Fruchtproduktes befüllt und mittels eines Übergabeelements an einen der drei Autoklaven, der zu diesem Zwecke einseitig geöffnet ist, übergeben. Ist dieser erste Autoklav vollständig beladen, wird er geschlossen und der Sterilisationsprozess beginnt, während die weiteren zugeführten befüllten Behälter bereits in den nächsten Autoklaven befördert werden. Ist auch dieser Autoklave gefüllt, wiederholt sich der Vorgang beim dritten Autoklaven, während gleichzeitig der erste Autoklav entladen wird, indem das sterilisierte Produkt Reihe für Reihe aus den Behältern in die späteren Verpackungen umgefüllt wird.

Es ist schnell ersichtlich, dass bei der Verwendung der erfindungsgemäßen Vorrichtung unterschiedliche Behälter zum Einsatz kommen können, einerseits kann es sich um oben offene Behälter handeln, die dann in die späteren Packungen durch Verschwenken der Behälter entleert werden, andererseits sind auch Behälter des gattungsgemäßen Standes der Technik denkbar.

Eine weitere Lehre der Erfindung sieht vor, dass nach der aseptischen Fülleinheit und vor der Verschließeinheit eine Fülleinheit für Flüssigkeit vorgesehen sein kann. Auf diese Weise kann dem nach der Sterilisation ohne Prozesswasser sterilisierten Frucht- bzw. Gemüseprodukt ein entsprechender Saft oder Sud in die noch offene Packung gegeben werden.

Gemäß einer weiteren Ausgestaltung der Erfindung hat es sich als zweckmäßig erwiesen, die Portioniereinheit auf einem Drehteller anzuordnen, wobei die Geschwindigkeit des Drehtellers der Transportgeschwindigkeit der Behälter angepasst ist.

Die Erfindung wird nachfolgend anhand einer lediglich ein bevorzugtes Ausführungsbeispiel darstellenden Zeichnung näher erläutert.

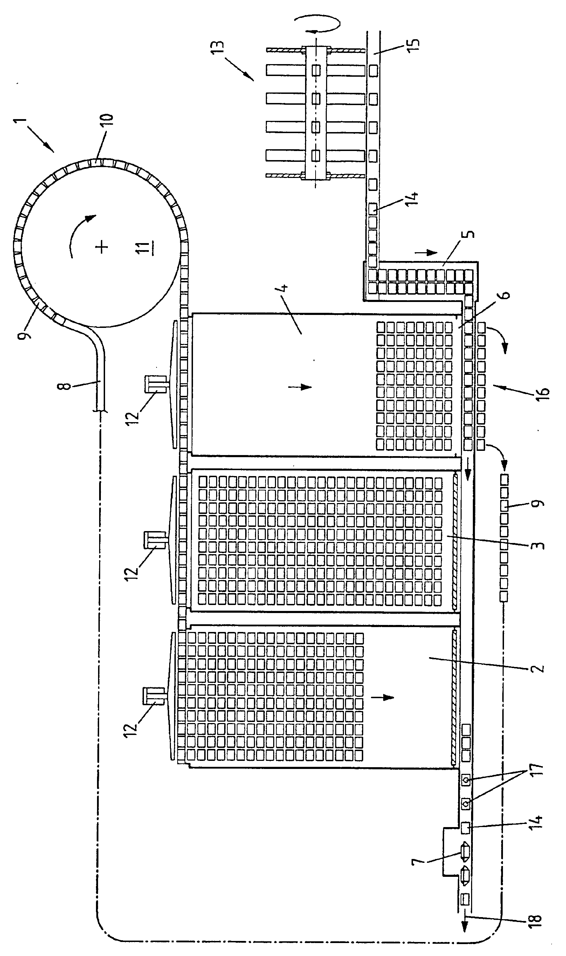

In der einzigen Figur ist die Vorrichtung mit ihren wichtigsten Komponenten gezeigt. Die Vorrichtung besteht dabei zunächst und im wesentlichen aus einer Portioniereinheit 1, drei parallel angeordneten Autoklaven 2, 3, und 4, die die eigentliche Sterilisiereinheit bilden, einer Sterilisiereinheit 5 für die späteren Packungen, einer Fülleinheit 6, die das sterilisierte Produkt umfüllt und einer Verschließeinheit 7.

Aus der Figur geht deutlich hervor, dass auf einer endlosen Führungsbahn 8, die teilweise nur strichpunktiert dargestellt ist, eine Vielzahl einzelner Behälter 9 transportiert werden, wobei die nur angedeutete Portioniereinheit 1 eine vorgegebene Menge eines stückigen Frucht- oder Gemüseproduktes in die Behälter 9 füllt, die dann als gefüllte Behälter 10 die Portioniereinrichtung 1 wieder verlassen.

Im dargestellten und insoweit bevorzugten Ausführungsbeispiel ist die Portioniereinheit 1 als Drehteller 11 ausgebildet, wobei etwa drei Viertel des Umfangs dieses Drehtellers 11 von der Führungsbahn 8 umgeben werden. Der Drehteller 11 ist dabei unmittelbar vor den Autoklaven 2, 3 und 4 angeordnet.

Die befüllten Behälter 10 werden dann auf der Führungsbahn vor die jeweiligen Autoklaven 2, 3, 4 gesetzt, und dann batchweise den einzelnen Autoklaven 2, 3, 4 zugeführt.

Aufgrund der Verwendung von drei parallel angeordneten Autoklaven ist die Arbeitsweise der erfindungsgemäßen Vorrichtung wie folgt:
Zunächst wird der geöffnete Autoklav 2 mittels eines Beladeelementes 12 Reihe für Reihe gefüllt. Ist ein Autoklav gefüllt, wie beim Autoklaven 3 dargestellt, so wird er verschlossen und die eigentliche Sterilisation kann beginnen. Der dritte Autoklav, im dargestellten Beispiel der Autoklav 4, wird derweil entladen, in dem Reihe für Reihe mit sterilisiertem Produkt gefüllte Behälter 10 ausgeschleust werden.
Rechts im Bild ist schematisch ein Dornrad 13 dargestellt, auf dem, gleichfalls kontinuierlich, eine Vielzahl von Packungen 14 hergestellt werden, welche, oben geöffnet, auf einer Führungsbahn 15 der Sterilisiereinheit 5 zugeführt werden, welche wiederum unmittelbar benachbart der Autoklaven 2, 3 und 4 angeordnet ist. Die Packungen 14 werden dabei dem jeweils zu entladenden Autoklaven, im Beispiel dem Autoklaven 4, vorgesetzt, wo das Entleeren der Behälter 10 in die Packungen 14 stattfindet. Ein nur mit Doppelpfeilen schematisch dargestelltes Übergabeelement 16 führt dann die geleerten Behälter 9 wieder der Führungsbahn 8 zu, wo sie in einem Kreislauf wieder der Portioniereinheit 1 zugeschleust werden.
Die mit Produkt gefüllten Packungen 14 laufen aus der Führungsbahn 15 weiter zu einer - optionalen - Flüssigkeitsfülleinheit 17, wo dem Produkt Saft, Sud od. dgl. in gewünschter Menge zugegeben werden kann, bevor die Packungen 14 in der Verschließeinheit 7 verschlossen werden. Die verkaufsfertigen Packungen werden dann am Ende der Führungsbahn 15 in Richtung des Pfeiles 18 an eine sich anschließende nicht dargestellte Palettiereinheit weitergegeben.

## Patentansprüche

1. Vorrichtung zum kontinuierlichen Sterilisieren eines stückigen Gemüse- bzw. Fruchtproduktes mit einer Vielzahl von Behältern zur Aufnahme eines portionierten zu sterilisierenden Produkts und wenigstens je einer Portioniereinheit, Sterilisiereinheit für die Behälter, Sterilisiereinheit für die das Produkt aufnehmenden Packungen, aseptischer Fülleinheit und Verschließeinheit, wobei die Behälter kontinuierlich im Kreislauf gefördert werden,
**dadurch gekennzeichnet,dass** als Sterilisiereinheit für die Behälter wenigstens drei Autoklaven (2, 3, 4) vorgesehen sind, von denen stets einer beladen, ein zweiter zur Sterilisation mit Druck und Temperatur beaufschlagt und der Dritte bei gleichzeitigem Umfüllen des Produktes in die Packungen entladen wird.

2. Vorrichtung nach Anspruch 1,
**dadurch gekennzeichnet,dass** die Größe der Autoklaven (2, 3, 4) so gewählt ist, dass die Be- bzw. Entladezeit im wesentlichen der Sterilisationsdauer entspricht.

3. Vorrichtung nach Anspruch 1 oder 2,
**dadurch gekennzeichnet,dass** die Behälter (9, 10) außerhalb der Autoklaven (2, 3, 4) einzeln in einer Zwangsführung (8) geführt werden.

4. Vorrichtung nach einem der Ansprüche 1 bis 3,
**dadurch gekennzeichnet,dass** jeder Autoklav (2, 3, 4) eine Vielzahl von Behältern (10) aufnehmen kann.

5. Vorrichtung nach Anspruch 4,
**dadurch gekennzeichnet,dass** in jedem Autoklaven (2, 3, 4) mehrere Reihen mit jeweils mehreren Behältern (10) angeordnet sind.

6. Vorrichtung nach einem der Ansprüche 1 bis 5,
**dadurch gekennzeichnet,dass** nach der aseptischen Fülleinheit (6) und vor der Verschließeinheit (7) eine Fülleinheit (17) für Flüssigkeit vorgesehen ist.

7. Vorrichtung nach einem der Ansprüche 1 bis 6,
**dadurch gekennzeichnet,dass** die Portioniereinheit (1) auf einem Drehteller (11) angeordnet ist, dessen Drehgeschwindigkeit der Transportgeschwindigkeit der Behälter (9, 10) entspricht.

8. Vorrichtung nach einem der Ansprüche 1 bis 7,
**dadurch gekennzeichnet,dass** die Behälter (9, 10) als oben offene Behälter ausgebildet sind und zum Befüllen der Packungen (14) umgedreht werden.

9. Vorrichtung nach einem der Ansprüche 1 bis 7,
**dadurch gekennzeichnet,dass** die Behälter (9, 10) einen schwenk- oder drehbaren Boden aufweisen.
